Europäisches Patentamt

European Patent Office

Office européen des brevets

(19)

(11) Publication number : **0 671 485 A1**

(12) **EUROPEAN PATENT APPLICATION**

(21) Application number : 95301028.7

(22) Date of filing : 17.02.95

(51) Int. Cl.⁶ : **C23F 11/08**, C23F 11/18, G21C 19/30

(30) Priority : 10.03.94 US 209175

(43) Date of publication of application : 13.09.95 Bulletin 95/37

(84) Designated Contracting States : BE CH DE ES FR GB IT LI NL SE

(71) Applicant : GENERAL ELECTRIC COMPANY 1 River Road Schenectady, NY 12345 (US)

(72) Inventor : Hettiarachchi, Samson
19 Lorelei Lane
Menlo Park, California 94025 (US)
Inventor : Diaz, Thomas Pompilio
1770 East San Martin Avenue
San Martin, California 95046 (US)

(74) Representative : Greenwood, John David
London Patent Operation,
General Electric Technical Services Company, Inc.,
Essex House,
12/13 Essex Street
London WC2R 3AA (GB)

(54) Method of reducing the corrosion potential of components.

(57) A method for mitigating general corrosion and crack initiation and growth on the surface of metal components in a water-cooled nuclear reactor. A compound containing a non-noble metal such as zirconium or titanium is injected into the water of the reactor in the form of a solution or suspension. This compound decomposes under reactor thermal conditions to release ions/atoms of the non-noble metal which incorporate in or deposit on the surfaces of the components, including the interior surfaces of any cracks formed therein. The compound may be organic, organometallic or inorganic in nature. Zirconium deposited inside a crack will reduce the electrochemical potential inside the crack even if the bulk surface zirconium is depleted under high fluid flow conditions. As a result, the electrochemical potential inside the crack is decreased to a level below the critical potential to protect against intergranular stress corrosion cracking.

FIG. 2

EP 0 671 485 A1

This invention relates to reducing the corrosion potential of components exposed to high-temperature water. As used herein, the term "high-temperature water" means water having a temperature of about 150°C or greater, steam, or the condensate thereof. High-temperature water can be found in a variety of known apparatus, such as water deaerators, nuclear reactors, and steam-driven power plants.

Nuclear reactors are used in electric power generation, research and propulsion. A reactor pressure vessel contains the reactor coolant, i.e. water, which removes heat from the nuclear core. Respective piping circuits carry the heated water or steam to the steam generators or turbines and carry circulated water or feedwater back to the vessel. Operating pressures and temperatures for the reactor pressure vessel are about 7 MPa and 288°C for a boiling water reactor (BWR), and about 15 MPa and 320°C for a pressurized water reactor (PWR). The materials used in both BWRs and PWRs must withstand various loading, environmental and radiation conditions.

Some of the materials exposed to high-temperature water include carbon steel, alloy steel, stainless steel, and nickel-based, cobalt-based and zirconium-based alloys. Despite careful selection and treatment of these materials for use in water reactors, corrosion occurs on the materials exposed to the high-temperature water. Such corrosion contributes to a variety of problems, e.g., stress corrosion cracking, crevice corrosion, erosion corrosion, sticking of pressure relief valves and buildup of the gamma radiation-emitting Co-60 isotope.

Stress corrosion cracking (SCC) is a known phenomenon occurring in reactor components, such as structural members, piping, fasteners, and welds, exposed to high-temperature water. As used herein, SCC refers to cracking propagated by static or dynamic tensile stressing in combination with corrosion at the crack tip. The reactor components are subject to a variety of stresses associated with, e.g., differences in thermal expansion, the operating pressure needed for the containment of the reactor cooling water, and other sources such as residual stress from welding, cold working and other asymmetric metal treatments. In addition, water chemistry, welding, crevice geometry, heat treatment, and radiation can increase the susceptibility of metal in a component to SCC.

It is well known that SCC occurs at higher rates when oxygen is present in the reactor water in concentrations of about 1 to 5 ppb or greater. SCC is further increased in a high radiation flux where oxidizing species, such as oxygen, hydrogen peroxide, and short-lived radicals, are produced from radiolytic decomposition of the reactor water. Such oxidizing species increase the electrochemical corrosion potential (ECP) of metals. Electrochemical corrosion is caused by a flow of electrons from anodic to cathodic areas on metallic surfaces. The ECP is a measure of the thermodynamic tendency for corrosion phenomena to occur, and is a fundamental parameter in determining rates of, e.g., SCC, corrosion fatigue, corrosion film thickening, and general corrosion.

In a BWR, the radiolysis of the primary water coolant in the reactor core causes the net decomposition of a small fraction of the water to the chemical products $H_2$, $H_2O_2$, $O_2$ and oxidizing and reducing radicals. For steady-state operating conditions, equilibrium concentrations of $O_2$, $H_2O_2$, and $H_2$ are established in both the water which is recirculated and the steam going to the turbine. This concentration of $O_2$, $H_2O_2$, and $H_2$ is oxidizing and results in conditions that can promote inter-granular stress corrosion cracking (IGSCC) of susceptible materials of construction. One method employed to mitigate IGSCC of susceptible material is the application of hydrogen water chemistry (HWC), whereby the oxidizing nature of the BWR environment is modified to a more reducing condition. This effect is achieved by adding hydrogen gas to the reactor feedwater. When the hydrogen reaches the reactor vessel, it reacts with the radiolytically formed oxidizing species on metal surfaces to reform water, thereby lowering the concentration of dissolved oxidizing species in the water in the vicinity of metal surfaces. The rate of these recombination reactions is dependent on local radiation fields, water flow rates and other variables.

The injected hydrogen reduces the level of oxidizing species in the water, such as dissolved oxygen, and as a result lowers the ECP of metals in the water. However, factors such as variations in water flow rates and the time or intensity of exposure to neutron or gamma radiation result in the production of oxidizing species at different levels in different reactors. Thus, varying amounts of hydrogen have been required to reduce the level of oxidizing species sufficiently to maintain the ECP below a critical potential required for protection from IGSCC in high-temperature water. As used herein, the term "critical potential" means a corrosion potential at or below a range of values of about -230 to -300 mV based on the standard hydrogen electrode (SHE) scale. IGSCC proceeds at an accelerated rate in systems in which the ECP is above the critical potential, and at a substantially lower or zero rate in systems in which the ECP is below the critical potential. Water containing oxidizing species such as oxygen increases the ECP of metals exposed to the water above the critical potential, whereas water with little or no oxidizing species present results in an ECP below the critical potential.

Corrosion potentials of stainless steels in contact with reactor water containing oxidizing species can be reduced below the critical potential by injection of hydrogen into the feedwater. For adequate feedwater hydrogen addition rates, conditions necessary to inhibit IGSCC can be established in certain locations of the reactor. Different locations in the reactor system require different levels of hydrogen addition. Much higher hydrogen injection levels are necessary to reduce the ECP within the high radiation flux of the reactor core, or when oxidizing cationic impurities, e.g., cupric ion, are present.

It has been shown that IGSCC of Type 304 stainless-steel (containing 18-20% Cr, 8-10.5% Ni and 2% Mn) used in BWRs can be mitigated by reducing the ECP of the stainless steel to values below -0.230 V(SHE). An effective method of achieving this objective is to use HWC. However, high hydrogen additions, e.g., of about 200 ppb or greater, that may be required to reduce the ECP below the critical potential, can result in a higher radiation level in the steam-driven turbine section from incorporation of the short-lived N-16 species in the steam. For most BWRs, the amount of hydrogen addition required to provide mitigation of IGSCC of pressure vessel internal components results in an increase in the main steam line radiation monitor by a factor of five to eight. This increase in main steam line radiation can cause high, even unacceptable, environmental dose rates that can require expensive investments in shielding and radiation exposure control. Thus, recent investigations have focused on using minimum levels of hydrogen to achieve the benefits of HWC with minimum increase in the main steam radiation dose rates.

An effective approach to achieve this goal is to either coat or alloy the stainless steel surface with palladium or other noble metal. The presence of palladium on the stainless steel surface reduces the hydrogen demand to reach the required IGSCC critical potential of -0.230 V(SHE). The techniques used to date for palladium coating include electroplating, electroless plating, plasma deposition and related high-vacuum techniques. Palladium alloying has been carried out using standard alloy preparation techniques. Both of these approaches are *ex-situ* techniques in that they cannot be practiced while the reactor is in operation.

U.S. Patent No. 5,135,709 to Andresen et al. discloses a method for lowering the ECP on components formed from carbon steel, alloy steel, stainless steel, nickel-based alloys or cobalt-based alloys which are exposed to high-temperature water by forming the component to have a catalytic layer of a noble metal. As used herein, the term "noble metal" means metals from the group consisting of platinum, palladium, osmium, ruthenium, iridium, rhodium, and mixtures thereof.

In nuclear reactors, ECP is further increased by higher levels of oxidizing species, e.g., up to 200 ppb or greater of oxygen in the water, from the radiolytic decomposition of water in the core of the nuclear reactor. The method disclosed in U.S. Patent No. 5,135,709 further comprises providing a reducing species in the high-temperature water that can combine with the oxidizing species. In accordance with this known method, high concentrations of hydrogen, i.e., about 100 ppb or more, must be added to provide adequate protection to materials out of the reactor core, and still higher concentrations are needed to afford protection to materials in the reactor core. It is also known that platinum or palladium can be added to increase the ECP of stainless steel exposed to deaerated acidic aqueous solutions, thereby forming a passive oxide layer on the stainless steel and reducing further corrosion.

The formation of a catalytic layer of a noble metal on an alloy from the aforementioned group catalyzes the recombination of reducing species, such as hydrogen, with oxidizing species, such as oxygen or hydrogen peroxide, that are present in the water of a BWR. Such catalytic action at the surface of the alloy can lower the ECP of the alloy below the critical potential where IGSCC is minimized. As a result, the efficacy of hydrogen additions to high-temperature water in lowering the ECP of components made from the alloy and exposed to the injected water is increased manyfold.

The most critical requirement for IGSCC protection of Type 304 stainless steel is to lower its ECP to values below the protection potential, i.e., -0.230 V(SHE). The manner in which this potential is achieved is immaterial, e.g., by alloying, doping or by any other method. It has been demonstrated that it is sufficient to dope the oxide film by the appropriate material (e.g., Pd) to achieve a state of lower ECP. It was shown in later work that a thickness of ~200 to 300 Å of the doping element (Pd) is sufficient to impart this benefit of lower potential. This is not surprising because the ECP is an interfacial property, and hence modifying the interface by a process such as doping would alter its ECP. The critical requirement is that the dopant remain on the surface over a long period of time to gain the maximum benefit from the doping action.

U.S. Patent Appln. Ser. No. 08/143,513, the parent of the present continuation-in-part application, discloses an innovative method of *in-situ* application of a noble metal onto stainless steel or other metal surfaces by injecting a thermally decomposable noble metal compound into the high-temperature water that is in contact with the metal surface. That method dopes the oxide film with noble metal and provides sufficient catalytic activity for $H_2$ and $O_2$ recombination to reduce the ECP of the metal surfaces to required protection values. This approach of noble metal doping has been shown to be effective against crack initiation and crack growth in stainless steel at $H_2/O_2$ molar ratios > 2 in the environment.

The present invention is an alternative *in-situ* doping method for achieving the same objective of low ECPs which result in slow or no crack growth in stainless steel and other metals. This is accomplished by doping or coating IGSCC-susceptible metal surfaces with a non-noble metal such as zirconium or titanium. The present invention polarizes the metal potential in the negative direction without the addition of hydrogen.

The doping method of the present invention comprises the step of injecting a solution or suspension of a compound containing zirconium, titanium or other non-noble metal into the water of a water-cooled nuclear reactor. The selected non-noble metal must have the property of increasing the corrosion resistance of the stainless steel or other metal surface when incorporated therein or deposited thereon. The selected compound must have the property that it decomposes under reactor thermal conditions to release ions/atoms of the selected non-noble metal which incorporate in or deposit on the oxide film formed on the stainless steel or other metal surfaces. The preferred compound for this purpose is zirconium acetylacetonate, an organometallic compound. However, other zirconium compounds of organic, organometallic and inorganic nature can also be used for this purpose. The concentration of zirconium in the reactor water is preferably in a range up to 100 ppb.

Upon injection, the zirconium compound decomposes and deposits zirconium on surfaces of components made of stainless steel or other metal which are immersed in the water. For example, in the case of stainless steel, the zirconium is incorporated into the oxide film on the stainless steel surface via a thermal decomposition process of the organometallic compound wherein zirconium ions/atoms apparently replace iron, nickel and/or chromium atoms in the oxide film, resulting in a zirconium-doped oxide film. The oxide film is believed to include mixed nickel, iron and chromium oxides. Alternatively, zirconium may be deposited within or on the surface of the oxide film in the form of a finely divided metal. During deposition, zirconium will be deposited inside any existing cracks on the stainless steel surfaces. The zirconium deposits around the crack mouth region and into the interior of the crack. This doping technique reduces the ECP of the stainless steel surfaces, particularly the interior surfaces of any crack, to below the critical threshold ECP. Thus, this approach should be effective against crack initiation and crack growth in stainless steel and other metals even in the absence of hydrogen in the high-temperature water environment.

Furthermore, rapid depletion of zirconium from the crack interior should not occur because of the low fluid flow experienced inside the crack even if the crack mouth is in a high fluid flow regime. This promises to be a significant advantage because crack mitigation would still be achievable even if bulk surface zirconium removal occurs under high fluid flow conditions.

Exemplary embodiments will now be described. In the figures :

FIG. 1 is a schematic showing a partially cutaway perspective view of a conventional BWR.

FIG. 2 is a plot showing the ECP response as a function of the molar ratio of hydrogen to oxygen for three Type 304 stainless steel specimens: 304SS - not doped with palladium; 304SS(Pd) - doped with 58 ppb Pd; and 304SSPd1 - doped with 96 ppb Pd.

FIG. 3 illustrates the crack growth behavior in BWR water at 550°F of a specimens made of Alloy 182 which has been doped with 96 ppb Pd.

FIG. 4 is a plot of polarization curves for Zircaloy-2 and Zircaloy-4, illustrating a low corrosion potential of -0.800 V(SHE) in 8 ppm $NaNO_3$ in the absence of any added hydrogen.

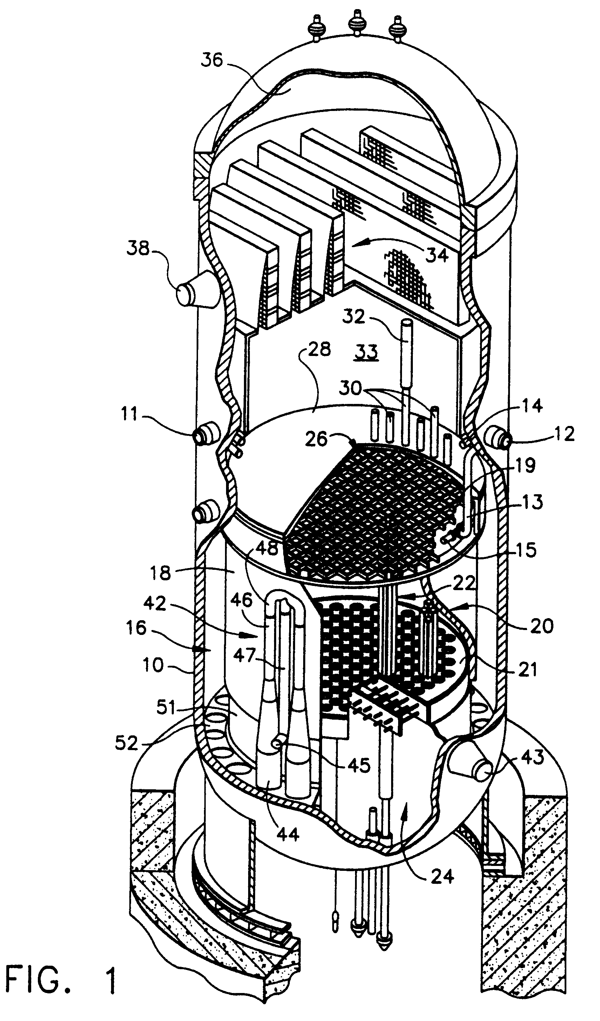

The fluid flow in a boiling water reactor will be generally described with reference to FIG. 1. Feedwater is admitted into a reactor pressure vessel (RPV) 10 via a feedwater inlet 12 and a feedwater sparger 14, which is a ring-shaped pipe having suitable apertures for circumferentially distributing the feedwater inside the RPV. A core spray inlet 11 supplies water to a core spray sparger 15 via core spray line 13. The feedwater from feedwater sparger 14 flows downwardly through the downcomer annulus 16, which is an annular region between RPV 10 and core shroud 18. Core shroud 18 is a stainless steel cylinder which surrounds the core 20 comprising numerous fuel assemblies 22 (only two 2 × 2 arrays of which are depicted in FIG. 1). Each fuel assembly is supported at the top by top guide 19 and at the bottom by core plate 21. Water flowing through downcomer annulus 16 then flows to the core lower plenum 24.

The water subsequently enters the fuel assemblies 22 disposed within core 20, wherein a boiling boundary layer (not shown) is established. A mixture of water and steam enters core upper plenum 26 under shroud head 28. Core upper plenum 26 provides standoff between the steam-water mixture exiting core 20 and entering vertical standpipes 30, which are disposed atop shroud head 28 and in fluid communication with core upper plenum 26.

The steam-water mixture flows through standpipes 30 and enters steam separators 32, which are of the axial-flow centrifugal type. The separated liquid water then mixes with feedwater in the mixing plenum 33, which mixture then returns to the core via the downcomer annulus. The steam passes through steam dryers 34 and enters steam dome 36. The steam is withdrawn from the RPV via steam outlet 38.

The BWR also includes a coolant recirculation system which provides the forced convection flow through the core necessary to attain the required power density. A portion of the water is sucked from the lower end of the downcomer annulus 16 via recirculation water outlet 43 and forced by a centrifugal recirculation pump (not shown) into jet pump assemblies 42 (only one of which is shown) via recirculation water inlets 45. The BWR has two recirculation pumps, each of which provides the driving flow for a plurality of jet pump assemblies.

The pressurized driving water is supplied to each jet pump nozzle 44 via an inlet riser 47, an elbow 48 and an inlet mixer 46 in flow sequence. A typical BWR has 16 to 24 inlet mixers.

The present invention is an in-situ technique to coat or dope stainless steel and other metal surfaces (including the interiors of cracks formed therein) inside a BWR with zirconium, titanium or other non-noble metal. This is accomplished by injecting a compound containing zirconium, titanium or other non-noble metal into the high-temperature water of the BWR. The invention will be disclosed with specific reference to doping of stainless steel surfaces with zirconium. However, it should be understood that other non-noble metals (such as niobium, yttrium, tungsten, vanadium, titanium, etc.) can be used in place of zirconium; and that the surfaces of components made of alloys other than stainless steel (e.g., nickel-based alloys, carbon steels, low alloy steels, etc.) can be doped to achieve reduced ECPs using the method of the present invention.

Preferably the zirconium compound is injected at a point upstream of the feedwater inlet 12 (see FIG. 1). The high temperatures as well as the gamma and neutron radiation in the reactor core act to decompose the compound, thereby freeing Zr ions/atoms for deposition on the oxide film which coats oxidized stainless steel surfaces in a BWR. One Zr-containing compound which could be used for this purpose is an organometallic compound, zirconium acetylacetonate. However, other zirconium compounds of organic, organometallic and inorganic nature can also be used for this purpose.

Experiments have been performed to determine the ECP response of Pd-doped Type 304 stainless steel by injecting an organometallic palladium compound, i.e., palladium acetylacetonate, into an autoclave that formed part of a high-temperature recirculating flow loop. The autoclave had a constant extension rate tensile (CERT) specimen made of Type 304 stainless steel and a stainless steel tip electrode also made of Type 304 stainless steel. The reference electrodes used to measure ECPs consisted of a $Cu/Cu_2O/ZrO_2$ type reference electrode and an external pressure balanced Ag/AgCl, 0.1 M KCl reference electrode. The recirculating flow loop contained deionized water heated to 550°F inside the autoclave. The oxygen level in the effluent water was 200 ppb.

An exemplary palladium acetylacetonate injection solution was prepared by dissolving 52.6 mg of palladium acetylacetonate powder in 40 ml of ethanol. The ethanol solution is then diluted with water. After dilution, 10 ml of ethanol are added to the solution. This is then diluted to a volume of 1 liter. Obviously, the concentration range can be varied. Alternatively, a water-based suspension can be formed, without using ethanol, by mixing palladium acetylacetonate powder in water. A zirconium acetylacetonate injection solution or suspension in accordance with the present invention can be prepared in analogous ways.

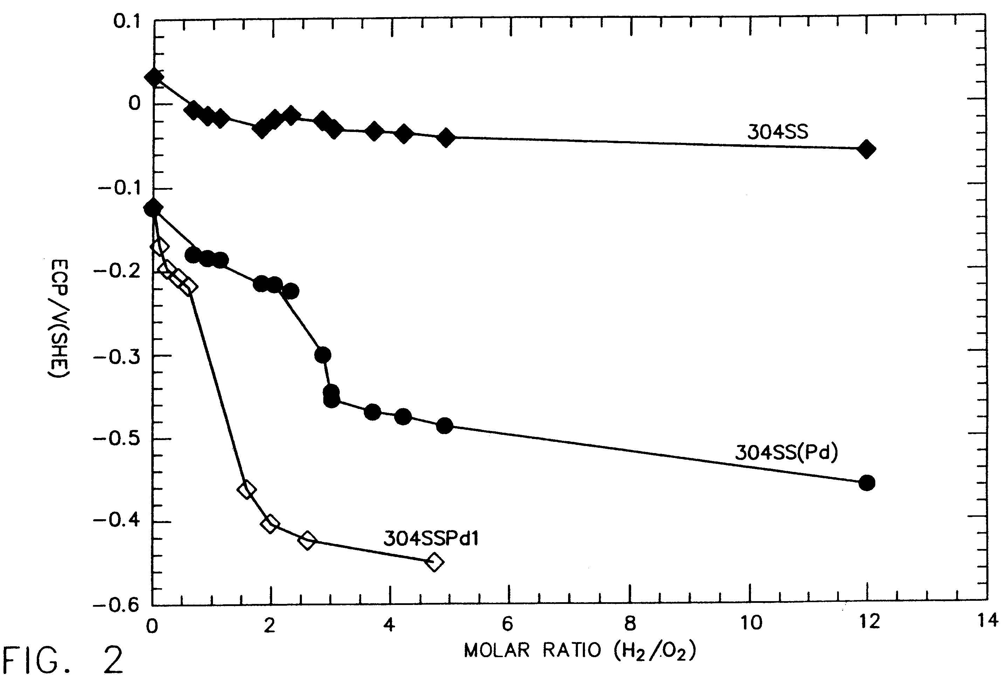

In one experiment, palladium acetylacetonate compound, dissolved in the ethanol/water mixture, was injected into the inlet side of the main pump in the flow loop using an injection pump at a rate so that the solution entering the autoclave (at 550°F) had a Pd concentration of ~58 ppb. In another experiment, palladium acetylacetonate compound was injected at a rate so that the solution entering the autoclave had a Pd concentration of ~96 ppb. The results of these experiments are depicted in FIG. 2.

For the 58 ppb Pd-doped specimen, the ECP reaches a value of -0.220 V(SHE) at a $H_2/O_2$ molar ratio of 2, whereas at the same molar ratio the 96 ppb Pd-doped specimen shows an ECP of -0.520 V(SHE). The latter specimen almost behaved like a pure platinum or pure palladium specimen. Thus, palladium doping of Type 304 stainless steel can achieve the IGSCC protection potential at a $H_2/O_2$ molar ratio of 2-2.5. For the same molar ratios, the ECP of undoped Type 304 stainless steel was -0.020 V(SHE), which is considerably higher than the IGSCC protection potential of -0.230 V(SHE). However, to attain the benefit of palladium doping, hydrogen addition is still required, but at a much lower level than would be necessary if there were no palladium.

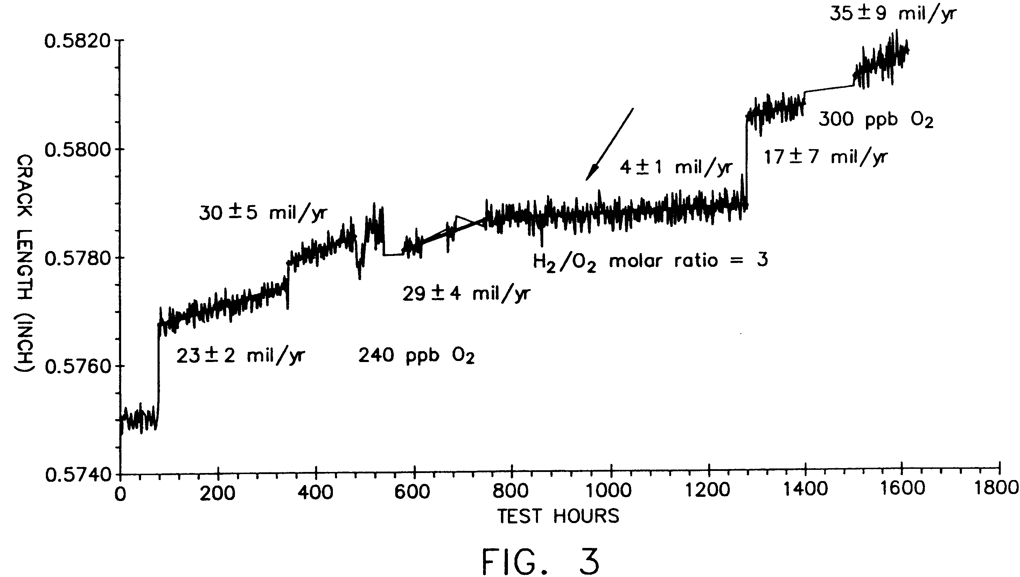

Further experiments were conducted to demonstrate the effectiveness of palladium doping in mitigating cracks in Alloy 182, which is a nickel-based alloy. An Alloy 182 specimen was doped with 96 ppb Pd. Crack growth was measured in BWR water at 550°F having an excess of hydrogen, i.e., a $H_2/O_2$ molar ratio > 2. The results of this experiment are depicted in FIG. 3.

Referring to FIG. 3, the crack growth behavior of a Pd-doped Alloy 182 specimen is shown at a dissolved oxygen level of 240 ppb $O_2$ over a time period of 760 hr. During this time, the crack growth rate stabilizes at ~30 mils/yr in high-purity BWR-type water having a conductivity of ~0.170 μS/cm. The slightly higher conductivity of the water is due to the higher dissolved oxygen content. At 760 hours, $H_2$ is added to the system so that the $H_2/O_2$ molar ratio > 2. Clearly, the crack growth rate (CGR) drops from ~30 mils/yr to ~4 mils/yr, and remains at this value for more than 400 hours. At 1260 hr, the $H_2$ was turned off and the system reverted back to 300 ppb $O_2$. The CGR rose to a value of ~35 mils/yr. These test results demonstrate the ability of palladium doping to mitigate the CGR of an Alloy 182 specimen with minimum hydrogen demand, i.e., at a $H_2/O_2$ molar ratio of 3. Once again, to achieve the benefit of palladium doping, hydrogen addition is required, but at a much lower level than would be necessary if there were no palladium. Similar crack mitigation behavior has been exhibited by Pd-doped Alloy 600 (a nickel-chromium-iron alloy) and by Pd-doped Type 304 stainless steel.

CERT test data for Pd-doped and undoped Type 304 stainless steel specimens, all of which were pre-oxidized, are compared in Table I:

### TABLE I

| Specimen | $O_2$ (ppb) | $H_2$ (ppb) | $H_2/O_2$ | ECP (V,SHE) | TTF* (hr) | Max.Load (lbs.) | IGSCC (%) |
|---|---|---|---|---|---|---|---|
| Undoped | 180 | 25 | 2.22 | +0.010 | 144 | 565 | 25 |
| Pd-doped | 180 | 25 | 2.22 | -0.265 | 319 | 825 | 0 |
| Pre-cracked/ Pd-doped | 200 | 18 | 1.44 | -0.300 | 311 | 800 | 3 |

* TTF — total time to failure.

This test data shows that an undoped Type 304 stainless steel specimen in water with a $H_2/O_2$ molar ratio of 2.22 failed after 144 hr showing 25% IGSCC. The maximum load in this case was 565 lbs. An identical specimen, after Pd doping, failed at 319 hr showing 0% IGSCC (i.e., ductile failure). The Pd-doped specimen was able to sustain a load of 825 lbs., typical of similar specimens showing ductile failure. A pre-cracked Pd-doped specimen also showed a long failure time of 311 hr and was able to sustain a load of 800 lbs. despite the previously existing crack. The ECP in this case was -0.300 V(SHE) at a $H_2/O_2$ molar ratio of 1.44. The specimen showed 3% IGSCC, which was due to the IGSCC generated by the pre-cracking stage. This crack did not grow subsequent to palladium doping. This CERT test demonstrated that palladium doping is effective in both preventing the initiation of intergranular stress corrosion cracks and in mitigating the already existing cracks.

Thus, palladium doping combined with hydrogen addition is effective in mitigating IGSCC cracking. The action of palladium doping is to cause very efficient recombination of added $H_2$ with $O_2$ present in the system such as in an operating BWR, so that the local $O_2$ levels are considerably reduced. The metal surface (e.g., Type 304 stainless steel) in effect sees much less $O_2$ even though the bulk fluid may have a much higher $O_2$ content. The lowering of surface $O_2$ (i.e., at the interface) is sufficient to bring about the necessary ECP change. The amount of $H_2$ required to achieve the protection potential, even if the metal surface were doped with palladium, depends to a large extent on the specific nature of the plant. As an example, in the case of a high-power-density plant, such as a BWR 4, the required hydrogen may be relatively small so that the main steam line radiation levels may still remain at the background level. However, for a low-power-density plant, such as a BWR 3, where recombination of the $H_2$ and $O_2$ in the downcomer region is not as efficient, more $H_2$ may be required to achieve IGSCC protection. Thus, although palladium doping helps, the benefit may not be as much as it would otherwise be if it were a high-power-density plant. Thus, in such situations, even with palladium doping, the required $H_2$ levels may be sufficiently high to bring the main steam line radiation levels above the background level. On the other hand, if an element existed that could lower the ECP without the addition of hydrogen, then that would be a great benefit, because the question of increasing the main steam line radiation level does not arise. It is in this context that zirconium doping was viewed as a possible alternative to palladium doping, particularly based on observations of the ability of Zr-Nb alloy to lower the ECP of a Type 304 stainless steel CERT specimen.

ECP and $O_2$ test data at 547°F for a Type 304 stainless steel CERT specimen held in place in a clevis using oxidized Zr-Nb pins, a Type 304 stainless steel electrode tip and a Type 304 stainless steel CERT specimen held in a clevis using $ZrO_2$(MgO) ceramic pins are compared in Table II. All stainless steel specimens had been pre-oxidized before the test.

### TABLE II

| Specimen | $O_2$ (ppb) | ECP (V,SHE) |
|---|---|---|
| 304 SS (CERT) with oxidized Zr-Nb pins | 225 | -0.196 |
| 304 SS electrode tip | 225 | +0.060 |
| 304 SS (CERT) with $ZrO_2$ (MgO) pins | 235 | +0.090 |

A constant extension rate tensile (CERT) test was performed at 547°F with a Type 304 stainless steel specimen. The specimen was held in the clevis of a standard CERT autoclave using oxidized Zr-Nb pins. During the test it was discovered that the ECP of the stainless steel specimen was far more negative (-0.190 V/SHE) than expected at the oxygen level (225 ppb $O_2$) used in the study. A preoxidized Type 304 stainless steel elec-

EP 0 671 485 A1

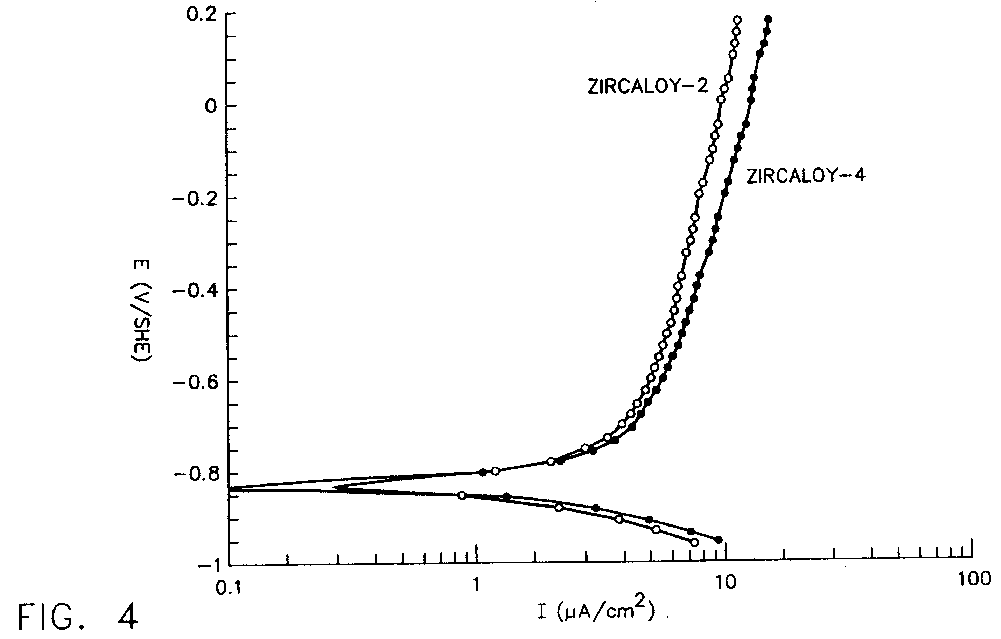

trode tip that was in the same autoclave showed a potential of +0.060 V(SHE), which was anticipated in the high-oxygen environment used. Based on this result, it was concluded that the oxide film formed on the Zr-Nb pin cracked under the load during the CERT test, which exposed the bare zirconium/niobium metal that contacted the Type 304 stainless steel specimen. This caused a mixed potential to be established at the stainless steel specimen dominated by the negative potential of the Zr-Nb alloy material. Thus, the Type 304 stainless steel CERT specimen showed a negative potential of ~0.196 V(SHE) instead of showing a positive potential at 225 ppb $O_2$. This observation is consistent with the finding that Zircaloy-2 and Zircaloy-4 also show very negative potentials of -0.820 V(SHE) at 550°F in 8 ppm $NaNO_3$ in the presence of 248 ppb $O_2$, as shown in FIG. 4.

FIG. 4 is a plot of polarization curves for Zircaloy-2 and Zircaloy-4 illustrating a low corrosion potential of ~0.800 V(SHE) in 8 ppm $NaNO_3$ at 289°C in the absence of any added $H_2$, i.e., having only an oxygen level of 248 ppm $O_2$. FIG. 4 indicates that if the metal surface incorporates an insulating film such as that formed by zirconium or one of its alloys, then it is possible to achieve very low ECPs without using any $H_2$. Thus, in principle, because of the low ECPs, it should be possible to mitigate IGSCC cracking of susceptible alloys such as Type 304 stainless steel, nickel alloys and other steels by doping the alloy surface with a metallic element such as zirconium, so that the surface behaves more like a zirconium surface, resulting in a lower ECP. Zirconium doping of stainless steel surfaces could be achieved using zirconium acetylacetonate or an inorganic compound such as $Zr(NO_3)_4$ in a manner similar to that used for Pd doping of stainless steel surfaces. Other potential materials that can be used for generating similar insulating or semiconducting surfaces include niobium, yttrium, tungsten, vanadium, titanium, molybdenum, chromium and nickel.

Thus, when a metal such as stainless steel is ohmically shunted to a zirconium-containing alloy, the potential of the stainless steel polarizes in the negative direction as observed in the above study. The exact potential to which stainless steel polarizes depends upon the area ratio of the zirconium/stainless steel and the electrochemical activity of the particular zirconium alloy itself. The fact that the Zr-Nb pins in fact are polarizing the Type 304 stainless steel CERT specimen potential in the negative direction was proven by replacing the Zr-Nb pins with ceramic ($ZrO_2(MgO)$) pins, which eliminated the mixed potential effect, and resulted in a positive potential (+0.090 V/SHE) for the stainless steel CERT specimen, as expected.

An important benefit of this observation is the ability to achieve required IGSCC protection potentials for Type 304 stainless steel, either by shunting the Type 304 stainless steel to zirconium or one of its alloys (electrochemically short range), or by doping the stainless steel surface with zirconium or one of its alloys, using an approach similar to that practiced with the Pd doping disclosed in U.S. Patent Appln. Ser. No. 08/143,513. Zirconium doping of stainless steel (or other metal) components of a BWR by injecting a zirconium compound into the high-temperature water would make it possible to polarize the stainless steel potential in the negative direction without using hydrogen. The benefits of this achievement would be numerous. First, the main steam radiation dose rates should remain at the background level because no hydrogen will be used. Second, zirconium and its alloys are compatible with fuel cladding material and hence fuel removal may not be required during zirconium doping. Lastly, the cost of zirconium is one-third the cost of palladium.

The foregoing method has been disclosed for the purpose of illustration. Variations and modifications of the disclosed method will be readily apparent to practitioners skilled in the art of hydrogen water chemistry. For example, the non-noble metals identified above as being useful in the invention can be used alone or in combination. Also the doping technique of the invention is not restricted to use with stainless steel surfaces, but also has application in reducing the ECP of other metals which are susceptible to IGSCC, e.g., nickel-based alloys. Furthermore, the metal acetylacetonate need not be injected as part of an ethanol/water solution. Instead the metal acetylacetonate powder can be mixed with water alone to form a suspension which is injected into the reactor water. To improve the stability of the suspension, it is obvious that ultrasonication can be used to break down the particles. An alternative application technology includes having the metal compound as pressed pellets in a basket hung inside the reactor at different locations and operating the reactor with pump heat until metal doping occurs. Another approach would be to inject the compound locally into areas that have a higher susceptibility to IGSCC. All such variations and modifications are intended to be encompassed by the claims set forth hereinafter.

## Claims

1. A method for mitigating general corrosion and initiation or propagation of a crack in a surface of a metal component in a water-cooled nuclear reactor or associated equipment, characterized by the step of injecting a solution or suspension of a compound containing a non-noble metal into the water of said reactor, said non-noble metal having the property of decreasing the electrochemical potential at said metal com-

7

ponent surface when incorporated therein or deposited thereon, and said compound having the property of decomposing under reactor thermal conditions to release ions/ atoms of said non-noble metal which incorporate in or deposit on said metal component surface.

2. The method as defined in claim 1, characterized in that said metal component is made of stainless steel.

3. The method as defined in claim 1, characterized in that said metal component is made of an alloy selected from the group consisting of stainless steel, nickel-based alloy, carbon steel and low alloy steel.

4. The method as defined in claim 1, characterized in that said compound is an organic, organometallic or inorganic compound of zirconium.

5. The method as defined in claim 1, characterized in that said compound is zirconium acetylacetonate.

6. The method as defined in claim 1, characterized in that said compound is $Zr(NO_3)_4$.

7. The method as defined in claim 1, characterized in that said compound is injected at a rate such that the concentration of said non-noble metal in the water of said reactor is sufficient to decrease the electrochemical potential of said metal component surface or inside a crack formed in said metal component surface to a level below the critical potential to protect against intergranular stress corrosion cracking.

8. The method as defined in claim 1, characterized in that said non-noble metal is taken from the group consisting of zirconium, titanium, niobium, vanadium, yttrium, tungsten, molybdenum, chromium and nickel.

9. A metal component having an oxide film on a surface thereof, characterized in that said oxide film is doped with ions/atoms of a non-noble metal having the property of decreasing the electrochemical potential of said metal component surface when incorporated in said oxide film, said non-noble metal being present in an amount such that when said metal component is immersed in high-temperature water, the electrochemical potential at said metal component surface is less than the critical potential to protect against intergranular stress corrosion cracking and general corrosion.

10. The metal component as defined in claim 9, characterized in that said non-noble metal is taken from the goup consisting of zirconium, titanium, niobium, vanadium, yttrium, tungsten, molybdenum, chromium and nickel.

FIG. 1

FIG. 2

EP 0 671 485 A1

FIG. 3

FIG. 4

EP 0 671 485 A1

**European Patent Office**

## EUROPEAN SEARCH REPORT

Application Number

EP 95 30 1028

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| E,L | EP-A-0 651 397 (GENERAL ELECTRIC COMPANY) "L":DOCUMENT SO QUOTED FOR ITS' CASTING DOUBT ON THE "FIRST DEPOSIT"CHARACTER OF US-SERIAL NO. 209572 AND THUS VALIDITY OF THE CONVENTION PRIORITY CLAIM * the whole document * | 1-5,7-10 | C23F11/08 C23F11/18 G21C19/30 |
| E,L | EP-A-0 651 073 (GENRAL ELECTRIC COMPANY) "L": DOCUMENT SO QUOTED FOR ITS' CASTING DOUBT ON THE "FIRST DEPOSIT"CHARACTER OF US SERIAL-NO. 209572 AND THUS VALIDITY OF THE CONVENTION-PRIORITY CLAIM * the whole document * | 1-5,7-10 | |
| X | DATABASE WPI Derwent Publications Ltd., London, GB; AN 84-059353 & JP-A-59 016 983 (KATAYAMA KAGAKU KOGYO KENKYUSH) * abstract * | 1-4,6-10 | |
| X | WO-A-92 18665 (GULF COAST PERFORMANCE CHEMICAL INC.) * the whole document * | 1,3,7-10 | TECHNICAL FIELDS SEARCHED (Int.Cl.6) C23F G21C |
| D,A | US-A-5 135 709 (P. L. ANDRESEN ET AL.) | | |
| A | EP-A-0 526 160 (GENERAL EELECTRIC COMPANY) | | |
| A | EP-A-0 265 723 (KATAYAMA CHEMICAL WORKS CO., LTD.) | | |

The present search report has been drawn up for all claims

| Place of search | Date of completion of the search | Examiner |
|---|---|---|
| THE HAGUE | 7 June 1995 | Fischer, W |

13